# EUROPEAN PATENT SPECIFICATION

(11) **EP 4 360 437 B1**
(45) Date of publication and mention of the grant of the patent: **03.09.2025**
(21) Application number: 23205434.6
(22) Date of filing: 24.10.2023
(51) Int. Cl.: A01D 41/127, A01D 45/02

(54) **SYSTEM AND METHOD FOR PROVIDING NOTIFICATIONS DURING AGRICULTURAL HARVESTER OPERATION AND ASSOCIATED HARVESTING IMPLEMENT**
SYSTEM UND VERFAHREN ZUR BEREITSTELLUNG VON BENACHRICHTIGUNGEN WÄHREND DES BETRIEBS EINER LANDWIRTSCHAFTLICHEN ERNTEMASCHINE UND ZUGEHÖRIGES ERNTEGERÄT
SYSTÈME ET PROCÉDÉ DE FOURNITURE DE NOTIFICATIONS PENDANT UNE OPÉRATION DE MOISSONNEUSE AGRICOLE ET OUTIL DE RÉCOLTE ASSOCIÉ

(30) Priority: 25.10.2022 US 202217972993
(43) Date of publication of application: 01.05.2024
(73) Proprietor: CNH Industrial America LLC, New Holland, PA 17557 (US)
(72) Inventor: ROMOSER, Tyler, New Holland, 17557 (US)
(74) Representative: CNH Industrial IP Department

(56) References cited:
- EP-A1- 3 770 014
- DE-T5- 112014 000 914
- US-A1- 2019 133 037
- US-A1- 2019 230 843
- US-A1- 2022 000 029
- US-A1- 2022 114 364

## Description

### FIELD OF THE INVENTION

The present disclosure generally relates to agricultural harvesters and, more particularly, to systems and methods for providing operating parameter notifications during operation of an agricultural harvester.

### BACKGROUND OF THE INVENTION

A harvester is an agricultural machine used to harvest and process crops. For example, a combine harvester may be used to harvest grain crops, such as wheat, oats, rye, barley, corn, soybeans, and flax or linseed. In general, the objective is to complete several processes, which traditionally were distinct, in one pass of the machine over a particular part of the field. In this regard, most harvesters are equipped with a harvesting implement, such as a header, which cuts and collects the crop from the field and feeds it to the base harvester for further processing. The harvester also includes a crop processing system, which performs various processing operations (e.g., threshing, separating, cleaning, etc.) of the harvested crop received from the harvesting implement (see for example US 2019/230843 A1).

During harvesting operations, the operator of an agricultural harvester must generally monitor various operating parameters of the harvester. However, such monitoring of operating parameters can direct the focus of the operator away from the harvesting operation, thereby leading to harvesting inefficiency, harvesting losses, and operator strain and fatigue. For example, the operator may have to take his or her eyes off of the field to check whether the row guidance system of the harvester is enabled and/or activated. This may, in turn, distract the operation from the harvesting operation.

Accordingly, an improved systems and methods for providing operating parameter notifications during operation of an agricultural harvester would be welcomed in the technology.

### SUMMARY OF THE INVENTION

Aspects and advantages of the technology will be set forth in part in the following description, or may be obvious from the description, or may be learned through practice of the technology.

In one aspect, the present subject matter is directed to a harvesting implement for an agricultural harvester according to claim 1.

In a further aspect, the present subject matter is directed to a method for providing operating parameter notifications during operation of an agricultural harvester according to claim 10.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended figures, in which:
FIG. 1 illustrates a partial sectional side view of one embodiment of an agricultural harvester in accordance with aspects of the present subject matter;
FIG. 2 illustrates a perspective view of the agricultural harvester shown in FIG. 1, particularly illustrating various components of the agricultural harvester;
FIG. 3 illustrates a top view of a row divider of a harvesting implement of the agricultural harvester in accordance with aspects of the present subject matter;
FIG. 4 illustrates a schematic view of one embodiment of a system for providing operating parameter notifications during the operation of an agricultural harvester in accordance with aspects of the present subject matter;
FIG. 5 illustrates a flow diagram providing one embodiment of control logic for providing operating parameter notifications during the operation of an agricultural harvester in accordance with aspects of the present subject matter; and
FIG. 6 illustrates a flow diagram of one embodiment of a method for providing operating parameter notifications during the operation of an agricultural harvester in accordance with aspects of the present subject matter.

Repeat use of reference characters in the present specification and drawings is intended to represent the same or analogous features or elements of the present technology.

### DETAILED DESCRIPTION OF THE DRAWINGS

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the claims. Thus, it is intended that the present invention covers such modifications and variations as come within the scope of the appended claims and their equivalents.

In general, the present subject matter is directed to a system and a method for providing operating parameter notifications during the operation of an agricultural harvester. As will be described below, the agricultural harvester includes a harvesting implement configured to harvest crops present within a field across which the harvesting is traveling. The harvesting implement, in turn, includes a frame and plurality of row dividers supported on the frame. Furthermore, a light-emitting device is positioned on a respective row divider of the plurality of row dividers. For example, in one embodiment, the light-emitting device may be configured as a light-emitting diode (LED) strip extending along extending along at least a portion of the outer surface of the center row divider.

In several embodiments, a computing system is configured to control the operation of the light-emitting device. More specifically, the computing system is configured to receive an input(s) (e.g., sensor data) indicative of an operating parameter(s) of the agricultural harvester. Thereafter, the computing system is configured to control the operation of the light-emitting device (e.g., the color of the light emitted) based on the operating parameter(s). For example, in some embodiments, the computing system may control the operation of the light-emitting device such that the light-emitting device emits a first color of light (e.g., orange light) when a row guidance system of the harvester is enabled but not activated and a second color of light (e.g., green light) when the row guidance system is activated.

Controlling the operation of a light-emitting device positioned on a row divider of a harvesting implement based on an operating parameter(s) of the agricultural harvester improves the operation of the harvester. More specifically, as described above, the operator may have to take his or her eyes off of the field to monitor or otherwise check certain operating parameters of the harvester during a harvesting operation. However, in the disclosed system and method, the light-emitting device is positioned on a row divider of the harvesting implement. In this respect, the light-emitting device is positioned directly within the operator's field of view when he or she is viewing the harvesting operation. As such, by controlling the operation of the light-emitting device (e.g., the color of the light emitted) based on the operating parameter(s) of the harvester, harvester operating parameter information (e.g., the status of the row guidance system) can be provided within the operator's field of view of the harvesting operation. Thus, with the disclosed system and method, the operator can receive visual notifications regarding one or more operating parameters of the agricultural harvester without having to take his or her eyes off of the field. This, in turn, improves harvesting inefficiency and reduces harvesting losses and operator strain and fatigue.

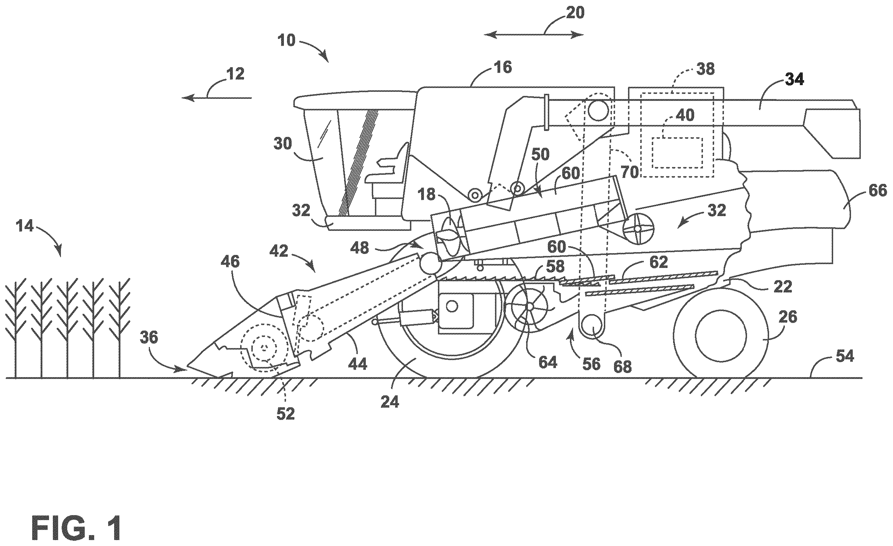

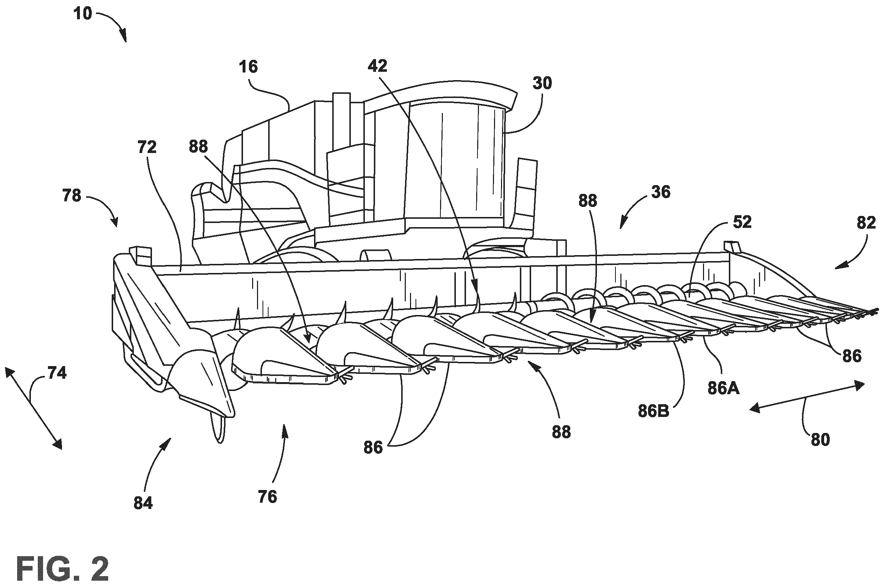

Referring now to the drawings, FIGS. 1 and 2 illustrate differing views of one embodiment of an agricultural harvester 10 in accordance with aspects of the present subject matter. Specifically, FIG. 1 illustrates a partial sectional side view of the agricultural harvester 10. Additionally, FIG. 2 illustrates a perspective view of the agricultural harvester 10, particularly illustrating various components of the agricultural harvester 10.

In general, the harvester 10 is configured to travel across a field in a forward direction of travel (indicated by arrow 12) to harvest a standing crop 14 present within the field. While traversing the field, the harvester 10 is configured to process the harvested material and store the grain, seed, or the like within a crop tank 16 of the harvester 10.

In the illustrated embodiment, the harvester 10 is configured as an axial-flow type combine in which the harvested crop material is threshed and separated while being advanced by and along a rotor 18 extending in an axial direction 20. However, in alternative embodiments, the harvester 10 may have any other suitable harvester configuration, such as a traverse-flow type configuration in which the rotor extends in a lateral direction.

The harvester 10 may include a chassis or main frame 22 configured to support and/or couple to various components of the harvester 10. For example, in several embodiments, the harvester 10 may include a pair of driven, front wheels 24 and a pair of steerable, rear wheels 26 coupled to the chassis 22. As such, the wheels 24, 26 may be configured to support the harvester 10 relative to the ground and move the harvester 10 in the forward direction of travel 12. Furthermore, the harvester 10 may include an operator's platform 28 having an operator's cab 30, a crop processing system 32, the crop tank 16, and a crop unloading tube 34 supported by the chassis 22. As will be described below, the crop processing system 32 may be configured to perform various processing operations on the harvested material as the crop processing system 32 transfers the harvested material from a harvesting implement 36 (e.g., a header) of the harvester 10 and through the harvester 10. Moreover, the harvester 10 may include an engine 38 and a transmission 40 mounted on the chassis 22. The transmission 40 may be operably coupled to the engine 38 and may provide variably adjusted gear ratios for transferring engine power to the wheels 24 via a drive axle assembly (or via axles if multiple drive axles are employed).

Additionally, as shown in FIG. 1, the harvester 10 includes a feeder 42 that couples to and supports the harvesting implement 36. More specifically, the feeder 42 may include a feeder housing 44 extending from a forward end 46 to an aft end 48. The forward end 46 of the feeder housing 44 may, in turn, be coupled to harvesting implement 36. Moreover, the aft end 48 of the feeder housing 44 may be pivotably coupled to the chassis 22 adjacent to a threshing and separating assembly 50 of the crop processing system 32. Such a pivotable coupling may permit movement of the harvesting implement 36 relative to the field surface in the vertical direction.

As the harvester 10 is propelled in the forward direction of travel 12 over the field with the standing crop 14, the crop material is severed from the stubble by a plurality of snapping rolls (not shown) and associated stripping plates (not shown) at the front of the harvesting implement 36. The harvested material is delivered by an auger 52 to the forward end 46 of the feeder housing 44, which supplies the harvested crop material to the threshing and separating assembly 50. In general, the threshing and separating assembly 50 may include a cylindrical chamber 54 in which the rotor 18 is rotated to thresh and separate the harvested material received therein. That is, the harvested material is rubbed and beaten between the rotor 18 and the inner surfaces of the chamber 54 to loosen and separate the grain, seed, or the like from the straw.

The material separated by the threshing and separating assembly 50 may fall onto a cleaning assembly 56 of the crop processing system 32. As will be described below, the cleaning assembly 56 may include a series of oscillating components, such as one or more pans 58, pre-sieves 60, and/or sieves 62, that are configured to oscillate relative to the frame 22. As such, the separated material may be spread out via the oscillation of such components 58, 60, 62 and the grain, seeds, or the like may eventually fall through apertures defined by the sieve(s) 62. Additionally, a cleaning fan 64 may be positioned adjacent to one or more of the pre-sieve(s) 60 and the sieve(s) 62 to provide an air flow through that removes chaff and other impurities from the material present thereon. The impurities may be discharged from the harvester 10 through the outlet of a straw hood 66 positioned at the aft end of the harvester 10. The cleaned harvested crop passing through the sieve(s) 62 may then fall into a trough of an auger 68, which may transfer the harvested crop to an elevator 70 for delivery to the crop tank 16.

Referring now to FIG. 2, the harvesting implement 36 may include a harvesting implement frame 72. In general, the harvesting implement frame 72 may extend along a longitudinal direction 74 between a forward end 76 and an aft end 78. The harvesting implement frame 72 may also extend along a lateral direction 80 between a first side 82 and a second side 84.

In this respect, the harvesting implement frame 72 may be configured to support or couple to a plurality of components of the harvesting implement 36. Specifically, in several embodiments, the harvesting implement frame 72 may support a plurality of cones or row dividers 86. For example, in the illustrated embodiment, twelve row dividers 86 are supported on the harvesting implement frame 72. Thus, in the illustrated embodiment, row dividers 86A, 86B correspond to the center row dividers in the lateral direction 80. However, in alternative embodiments, any other suitable number of row dividers 86 may be supported on the harvesting implement frame 72. Additionally, the harvesting implement auger 52 may be supported by the harvesting implement frame 72. Moreover, the snapping rolls (not shown) and associated stripping plates (not shown) may also be supported on and coupled to the harvesting implement frame 72.

In some embodiments, as shown in FIG. 2, the harvesting implement 36 may be configured as a corn header. In such embodiments, the plurality of row dividers 86 may extend forward from the harvesting implement frame 72 along the longitudinal direction 74. Moreover, the row dividers 86 may be spaced apart along the lateral direction 80 of the harvesting implement frame 72, with each adjacent pair of row dividers 86 defining an associated stalkway or recess 88 therebetween. As the agricultural harvester 10 is moved across the field to perform a harvesting operation thereon, the row dividers 86 separate the stalks of the crop such that the separated stalks are guided into the stalkways 88. Thereafter, the snapping rolls (not shown) pull the stalks downwardly onto the associated stripping plates (not shown) such that the ears of the standing crop are snapped from the associated stalks upon contact with the stripping plates. The auger 52 may then convey the harvested ears to the feeder 42 for subsequent processing by the crop processing system 32 (FIG. 1). However, in alternative embodiments, the harvesting implement 36 may be configured as any other suitable type of harvesting implement, such as a draper header.

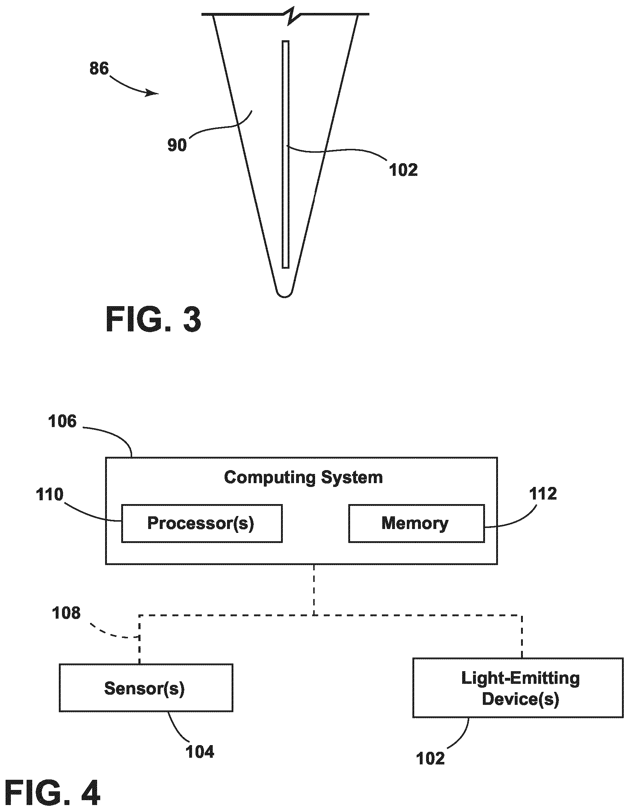

FIG. 3 illustrates a top view of one of the row dividers 86 of the harvesting implement 36. Specifically, in several embodiments, a light-emitting device 102 is positioned on the row divider 86. In general, the light-emitting device 102 is configured to emit light that is visible to the operator present within the operator's cab 30. As will be described below, the emitted light provides operating parameter notifications to the operator of the agricultural harvester 10 during operation of the harvester 10. For example, the light emitted by the light-emitting device 102 may provide a visual indication regarding whether the row guidance system of the agricultural harvester is off, enabled, or activated. Additionally, the emitted light may illuminate the harvesting implement 36, such as during low light conditions (e.g., at nighttime, during cloudy weather, etc.).

The light-emitting device 102 may be configured as any suitable device(s) or structure(s) that emit light therefrom. For example, in several embodiments, the light-emitting device 102 is configured as a light-emitting diode (LED) strip extending along at least a portion of an outer surface 90 of the row divider 86. Moreover, in some embodiments, the light-emitting device 102 may be configured to selectively emit different colors of light, such as based on the operating parameters of the agricultural harvester 10.

Furthermore, the harvesting implement 36 may include any suitable number of light-emitting devices 102 and/or the light-emitting device(s) 102 may be positioned on any of the row dividers 86. For example, in several embodiments, the harvesting implement 36 may include a single light-emitting device 102 positioned on its center row divider 86 in the lateral direction 80 as the operator generally has the best view of the center row divider 86 from the operator's cab 30. When there are an even number of row dividers 86 (e.g., in FIG. 2) on the harvesting implement 36, a light-emitting device 102 may be positioned one or both of the two center row dividers 86 (e.g., on one or both of the center row dividers 86A, 86B in FIG. 2). However, in alternative embodiments, light-emitting devices 102 may be positioned on several of the center-most row dividers 86 (e.g., the four center row dividers 86), on every other row divider 86, on every row divider 86, or the like.

It should be further be appreciated that the configuration of the agricultural harvester 10 described above and shown in FIGS. 1-3 are provided only to place the present subject matter in an exemplary field of use. Thus, it should be appreciated that the present subject matter may be readily adaptable to any manner of harvester configuration.

Referring now to FIG. 4, a schematic view of one embodiment of a system 100 for providing operating parameter notifications during operation of an agricultural harvester is illustrated in accordance with aspects of the present subject matter. In general, the system 100 will be described herein with reference to the agricultural harvester 10 described above with reference to FIGS. 1-3. However, it should be appreciated by those of ordinary skill in the art that the disclosed system 100 may generally be utilized with agricultural harvesters having any other suitable harvester configuration.

As shown in FIG. 4, the system 100 includes the light-emitting device(s) 102 positioned on a respective row divider(s) 86 of the harvesting implement 36 of the agricultural harvester 10.

Additionally, the system 100 may include one or more sensors 104. In general, the sensor(s) 104 is configured to generate data indicative of one or more operating parameters of the agricultural harvester 10. For example, such operating parameter(s) may include engine oil temperature, engine coolant temperature, transmission oil temperature, fan speeds, crop yield, auger speeds, crop tank fill amounts, and/or the like. As will be described below, the light-emitting device(s) 102 may be used to provide an indication(s) associated with the operating parameter(s) of the harvester 10 to the operator.

Moreover, the system 100 includes a computing system 106 communicatively coupled to one or more components of the agricultural harvester 10 and/or the system 100 to allow the operation of such components to be electronically or automatically controlled by the computing system 106. For instance, the computing system 106 may be communicatively coupled to the sensor(s) 104 via a communicative link 108. As such, the computing system 106 may be configured to receive data from the sensor(s) 104 that is indicative of various operating parameters of the harvester 10. Furthermore, the computing system 106 is communicatively coupled to the light-emitting device(s) 102 via the communicative link 118. In this respect, the computing system 106 may be configured to control the operation of the light-emitting device(s) 102 such that the light-emitting device(s) 102 emit light in a manner that provides a notification(s) to the operator associated with one or more operating parameter(s) of the harvester 10. In addition, the computing system 106 may be communicatively coupled to any other suitable components of the agricultural harvester 10 and/or the system 100.

In general, the computing system 106 may comprise one or more processor-based devices, such as a given controller or computing device or any suitable combination of controllers or computing devices. Thus, in several embodiments, the computing system 106 may include one or more processor(s) 110 and associated memory device(s) 112 configured to perform a variety of computer-implemented functions. As used herein, the term "processor" refers not only to integrated circuits referred to in the art as being included in a computer, but also refers to a controller, a microcontroller, a microcomputer, a programmable logic circuit (PLC), an application specific integrated circuit, and other programmable circuits. Additionally, the memory device(s) 112 of the computing system 106 may generally comprise memory element(s) including, but not limited to, a computer readable medium (e.g., random access memory RAM)), a computer readable non-volatile medium (e.g., a flash memory), a floppy disk, a compact disk-read only memory (CD-ROM), a magneto-optical disk (MOD), a digital versatile disk (DVD) and/or other suitable memory elements. Such memory device(s) 112 may generally be configured to store suitable computer-readable instructions that, when implemented by the processor(s) 110, configure the computing system 106 to perform various computer-implemented functions, such as one or more aspects of the methods and algorithms that will be described herein. In addition, the computing system 106 may also include various other suitable components, such as a communications circuit or module, one or more input/output channels, a data/control bus and/or the like.

The various functions of the computing system 106 may be performed by a single processor-based device or may be distributed across any number of processor-based devices, in which instance such devices may be considered to form part of the computing system 106. For instance, the functions of the computing system 106 may be distributed across multiple application-specific controllers or computing devices, such as a navigation controller, an engine controller, a transmission controller, a row guidance controller, and/or the like.

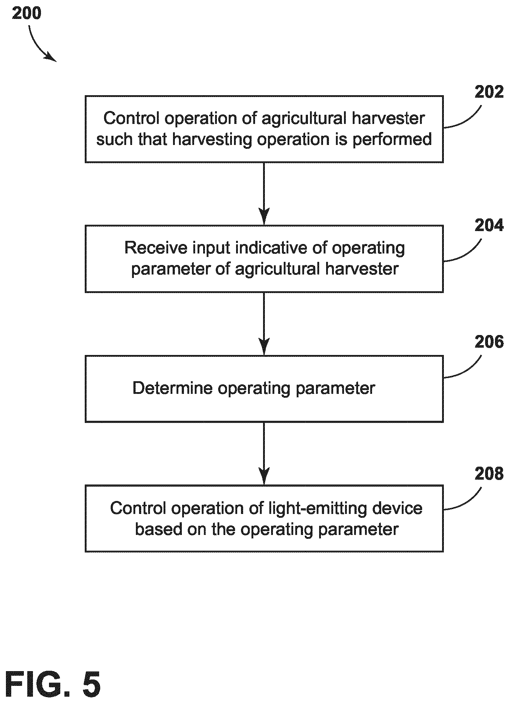

Referring now to FIG. 5, a flow diagram of one embodiment of example control logic 200 that may be executed by the computing system 106 (or any other suitable computing system) for providing operating parameter notifications during operation of an agricultural harvester is illustrated in accordance with aspects of the present subject matter. Specifically, the control logic 200 shown in FIG. 5 is representative of steps of one embodiment of an algorithm that can be executed to provide the operator with operating parameter notifications during operation of an agricultural harvester in a manner that does not require the operator to take his or her eyes off of the field in front of the harvester. Thus, in several embodiments, the control logic 200 may be advantageously utilized in association with a system installed on or forming part of an agricultural harvester to allow for providing real-time operating parameter notifications during operation of an agricultural harvester without requiring substantial computing resources and/or processing time. However, in other embodiments, the control logic 200 may be used in association with any other suitable system, application, and/or the like for providing operating parameter notifications during operation of an agricultural harvester.

As shown, at (202), the control logic 200 includes controlling the operation of an agricultural harvester such that a harvesting operation is performed on a field. Specifically, in several embodiments, the computing system 106 may be configured to control the operation of one or more components of the agricultural harvester 10 (e.g., the crop processing system 32, the engine 38, the transmission 40, etc.) such that a harvesting operation is performed as the harvester 10 travels across a field in the direction of travel 12.

In some embodiments, at (202), the computing system 106 may be configured to control the operation of the light-emitting device(s) 102 such that the light-emitting device(s) 102 emits light when the harvesting implement 36 is mechanically engaged. More specifically, as mentioned above, the computing system 106 is communicatively coupled to the light-emitting device(s) 102 via the communicative link 108. In this respect, when the harvesting implement 36 is mechanically engaged (e.g., mechanically coupled to the feeder 42, with the auger 52 rotating), the computing system 106 may transmit control signals to the light-emitting device(s) 102 via the communicative link 108. Such control signals instruct the light-emitting device(s) 102 to emit light in an initial color (e.g., white light). The emitted light is, in turn, visible to the operator within the operator's cab 30 when the operator monitoring the harvesting operation. Thus, when the operator sees the light-emitting device(s) 102 emitting light in the initial color, he or she then knows that the harvesting implement 36 is mechanically engaged.

Furthermore, at (204), the control logic 200 includes receiving an input indicative of an operating parameter of the agricultural harvester. Specifically, in several embodiments, the computing system 106 may be configured to receive one or more inputs indicative of one or more operating parameters of the agricultural harvester 10. For example, as mentioned above, in some embodiments, the computing system 106 may be communicatively coupled to the sensor(s) 104 via the communicative link 108. In this respect, as the harvester 10 travels across the field to perform the harvesting operation, the computing system 106 may receive data from the sensor(s) 104. Such data may, in turn, be indicative of one or more operating parameter of the agricultural harvester. In other embodiments, the received input(s) may be associated with operations being performed by the computing system 106, such as enablement and/or activation of a row guidance system of the agricultural harvester 10. However, in alternative embodiments, the computing system 116 may receive the input(s) from any other suitable device(s), such as a user interface or other operator input device(s) (not shown) present within the operator's cab 30.

At (204), the received input(s) may be indicative of any suitable operator parameter(s) of the agricultural harvester 10. For example, such operating parameter(s) may include enablement and/or activation of a row guidance system of the agricultural harvester 10, engine oil temperature, engine coolant temperature, transmission oil temperature, fan speeds, crop yield, auger speeds, crop tank fill amounts, and/or the like.

Additionally, at (206), the control logic 200 includes determining the operating parameter of the agricultural harvester 10. Specifically, in several embodiments, computing system 106 is configured to determine the operating parameter(s) of the agricultural harvester 10 based on the input(s) received at (204). For example, in some embodiments, the computing system 106 may analyze the received sensor data to determine the operating parameter(s). In other embodiments, the computing system 106 may analyze the operations it is performing (e.g., row guidance) to determine the operating parameter(s) (e.g., enablement and/or activation of the row guidance system). In further embodiments, the computing system 106 may analyze input(s) received from the user interface/operator input device(s) to determine the operating parameter(s).

Moreover, at (208), the control logic 200 includes controlling the operation of a light-emitting device positioned on a respective row divider of the plurality of row dividers based on the operating parameter. Specifically, in several embodiments, the computing system 106 is configured to control the operation of the light-emitting device(s) 102 based on the operating parameter(s) determined at (206). For example, the computing system 106 may transmit control signals to the light-emitting device(s) 102 via the communicative link 108. Such control signals instruct the light-emitting device(s) 102 to emit light based on the determined operating parameter(s).

In some embodiments, the light-emitting device(s) 102 may be controlled based on the status of the row guidance system. The row guidance system, in turn, automatically guides or otherwise controls the direction of travel 12 of the agricultural harvester 10 as it travels across the field during harvesting operations based on the locations of the crop rows within the field. In such embodiments, when it is determined that the row guidance system is enabled but not activated, the computing system 106 may control the operation of the light-emitting device(s) 102 such that the light-emitting device(s) 102 emit light in a first color (e.g., orange). The row guidance system is enabled but not activated when the row guidance system can identify the crop rows but is not guiding the harvester 10 relative to the crop rows. Moreover, the first color is different than the initial color emitted at (202) when the harvesting implement 36 is mechanically engaged. Furthermore, in such embodiments, when it is determined that the row guidance system is activated, the computing system 106 may control the operation of the light-emitting device(s) 102 such that the light-emitting device(s) 102 emit light in a second color (e.g., green). The row guidance system is activated when the row guidance system is guiding the harvester 10 relative to the crop rows. In addition, the second color is different than the initial color emitted at (202) when the harvesting implement 36 is mechanically engaged and the first color. The emitted light is, in turn, visible to the operator within the operator's cab 30 when the operator monitoring the harvesting operation. Thus, when the operator sees the light-emitting device(s) 102 emitting light in the first color, he or she then knows that the row guidance system is enabled but not activated. Similarly, when the operator sees the light-emitting device(s) 102 emitting light in the second color, he or she then knows that the row guidance system is activated.

Additionally, in further embodiments, the light-emitting device(s) 102 may emit a flashing light when the determined operating parameter(s) has fallen outside of an associated range. Specifically, in such embodiments, the computing system 106 may be configured to compare the operating parameter(s) determined at (206) to an associated range. Thereafter, when the determined operating parameter(s) falls outside of the associated range, the computing system 106 may be configured to control the operation of the light-emitting device(s) 102 such that the light-emitting device(s) 102 emits a flashing light (e.g., a flashing red light). For example, when the engine coolant temperature exceeds a maximum coolant temperature, the light-emitting device(s) 102 may emit a flashing light. The flashing light is, in turn, visible to the operator within the operator's cab 30 when the operator monitoring the harvesting operation. Thus, when the operator sees a flashing light on the harvesting implement 36, he or she then knows that an operating parameter(s) of the agricultural harvester 10 has fallen outside of its associated range.

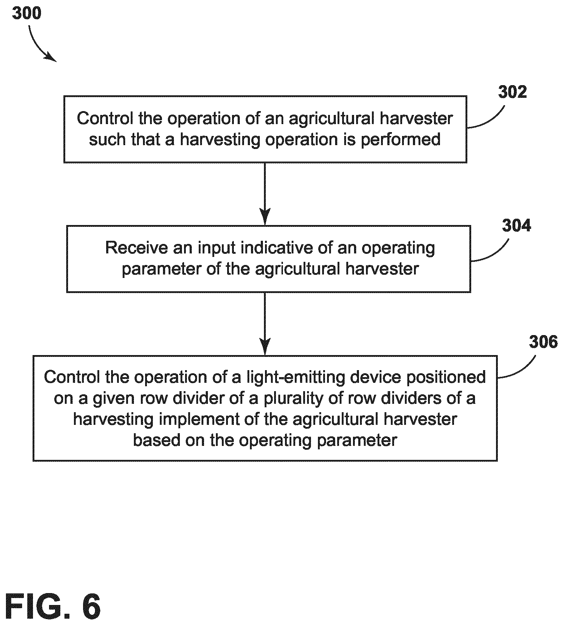

Referring now to FIG. 6, a flow diagram of one embodiment of a method 300 for providing operating parameter notifications during operation of an agricultural harvester is illustrated in accordance with aspects of the present subject matter. In general, the method 300 will be described herein with reference to the agricultural harvester 10 and the system 100 described above with reference to FIGS. 1-5. However, it should be appreciated by those of ordinary skill in the art that the disclosed method 300 may generally be implemented with any agricultural harvester having any suitable harvester configuration and/or within any system having any suitable system configuration. In addition, although FIG. 6 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 6, at (302), the method 300 includes controlling, with a computing system, the operation of an agricultural harvester such that a harvesting operation is performed. For instance, as described above, the computing system 106 may be configured to control the operation of one or more components and/or systems of the agricultural harvester 10 (e.g., the crop-processing system 32, the engine 38, the transmission 40, and/or the like) such the agricultural harvester 10 performs harvesting operation.

Furthermore, at (304), the method 300 includes receiving, with the computing system, an input indicative of an operating parameter of the agricultural harvester. For instance, as described above, the computing system 106 may be configured to receive an input indicative of an operating parameter of the agricultural harvester 10 (e.g., from the sensor(s) 104).

Additionally, at (306), the method 300 includes controlling, with the computing system, the operation of a light-emitting device positioned on a respective row divider of a plurality of row dividers of a harvesting implement of the agricultural harvester based on the operating parameter. For instance, as described above, the computing system 106 may be configured to control the operation of the light-emitting device(s) 102 positioned on a respective row divider 86 of the plurality of row dividers 86 based on the operating parameter(s).

It is to be understood that the steps of the control logic 200 and the method 300 are performed by the computing system 106 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the computing system 106 described herein, such as the control logic 200 and the method 300, is implemented in software code or instructions which are tangibly stored on a tangible computer readable medium. The computing system 106 loads the software code or instructions via a direct interface with the computer readable medium or via a wired and/or wireless network. Upon loading and executing such software code or instructions by the computing system 106, the computing system 106 may perform any of the functionality of the computing system 106 described herein, including any steps of the control logic 200 and the method 300 described herein.

## Claims

1. A system (100) for providing operating parameter notifications during operation of an agricultural harvester (10), the system (100) comprising a harvesting implement (36) including a frame (72) and a plurality of row dividers (86, 86A, 86B) supported on the frame (72), the system (100) **characterized by**:
a light-emitting device (102) positioned on a respective row divider (86, 86A, 86B) of the plurality of row dividers (86, 86A, 86B); and
a computing system (106) configured to:
receive an input indicative of an operating parameter of the agricultural harvester (10); and
control an operation of the light-emitting device (102) based on the operating parameter.

2. The system (100) as in claim 1, wherein the operating parameter comprises at least one of a row guidance system of the agricultural harvester (10) being enabled or the row guidance system being activated.

3. The system (100) as in any preceding claim, wherein, when controlling the operation of the light-emitting device (102), the computing system (106) is configured to:
control the operation of the light-emitting device (102) such that the light-emitting device (102) emits a first color of light when the row guidance system is enabled but not activated; and
control the operation of the light-emitting device (102) such that the light-emitting device (102) emits a second color of light when the row guidance system is activated, the second color of light being different than the first color of light.

4. The system (100) as in claim 1, further comprising:
a sensor (104) configured to generate data indicative of the operating parameter of the agricultural harvester (10), the sensor (104) being communicatively coupled to the computing system (106),
wherein:
when receiving the input, the computing system (106) is configured to receive the generated data from the sensor (104); and
the computing system (106) is further configured to determine the operating parameter based on the received data.

5. The system (100) as in any of claims 1 or 4, wherein, when controlling the operation of the light-emitting device (102), the computing system (106) is configured to:
compare the determined operating parameter to a predetermined range; and
when the determined operating parameter falls outside of the predetermined range, control the operation of the light-emitting device (102) such that the light-emitting device (102) emits a flashing light.

6. The system (100) as in any preceding claim, wherein, when controlling the operation of the light-emitting device (102), the computing system (106) is configured to control the operation of the light-emitting device (102) such that the light-emitting device (102) emits light when the harvesting implement (36) is mechanically engaged.

7. The system (100) as in any preceding claim, wherein the light-emitting device (102) comprises a light-emitting diode (LED) strip (102) extending along at least a portion of an outer surface (90) of the respective row divider (86, 86A, 86B).

8. The system (100) as in any preceding claim, wherein the respective row divider (86, 86A, 86B) is a center row divider (86A, 86B) of the plurality of row dividers (86, 86A, 86B).

9. The system as in any preceding claim, wherein the harvesting implement (36) is a corn header (36).

10. A method (300) for providing operating parameter notifications during operation of an agricultural harvester (10), the agricultural harvester (10) including a harvesting implement (36) having a frame (72) and a plurality of row dividers (86, 86A, 86B) supported on the frame (72), the method (300) **characterized by**:
controlling, with a computing system (106), an operation of the agricultural harvester (10) such that a harvesting operation is performed;
receiving, with the computing system (106), an input indicative of an operating parameter of the agricultural harvester (10); and
controlling, with the computing system (106), an operation of a light-emitting device (102) positioned on a respective row divider (86, 86A, 86B) of the plurality of row dividers (86, 86A, 86B) based on the operating parameter.

11. The method (300) as in claim 10, wherein the operating parameter comprises at least one of a row guidance system of the agricultural harvester (10) being enabled or the row guidance system being activated.

12. The method (300) as in any of claims 10 or 11, wherein controlling the operation of the light-emitting device (102) comprises:
controlling, with the computing system (106), the operation of the light-emitting device (102) such that the light-emitting device (102) emits a first color of light when the row guidance system is enabled but not activated; and
controlling, with the computing system (106), the operation of the light-emitting device (102) such that the light-emitting device (102) emits a second color of light when the row guidance system is activated, the second color of light being different than the first color of light.

13. The method (300) as in claim 10, wherein receiving the input comprises receiving, with the computing system (106), sensor data indicative of the operating parameter of the agricultural harvester (10), the method (300) further comprising determining, with the computing system (106), the operating parameter based on the received sensor data.

14. The method (300) as in any of claims 10 or 13, wherein controlling the operation of the light-emitting device (102) comprises:
comparing, with the computing system(106), the determined operating parameter to a predetermined range; and
when the determined operating parameter falls outside of the predetermined range, controlling, with the computing system (106), the operation of the light-emitting device (102) such that the light-emitting device (102) emits a flashing light.

## Patentansprüche

1. System (100) zum Bereitstellen von Benachrichtigungen bezüglich eines Betriebsparameters während des Betriebs einer landwirtschaftlichen Erntemaschine (10), wobei das System (100) eine Erntevorrichtung (36) aufweist, die einen Rahmen (72) und eine Mehrzahl von Reihenteilern (86, 86A, 86B) umfasst, die an dem Rahmen (72) gehalten sind,
wobei das System (100) **gekennzeichnet ist durch**:
eine lichtemittierende Vorrichtung (102) an einem jeweiligen Reihenteiler (86, 86A, 86B) der Mehrzahl von Reihenteilern (86, 86A, 86B) angeordnet ist; und
ein Rechnersystem (106), dazu eingerichtet ist,
einen Eingang zu empfangen, der einen Betriebsparameter der landwirtschaftlichen Erntemaschine (10) angibt; und
einen Betrieb der lichtemittierenden Vorrichtung (102) basierend auf dem Betriebsparameter zu steuern.

2. System (100) nach Anspruch 1, wobei der Betriebsparameter mindestens einen Parameter aufweist, nämlich dass ein Reihenführungssystem der landwirtschaftlichen Erntemaschine (10) aktiviert ist oder dass das Reihenführungssystem eingeschaltet ist.

3. System (100) nach einem der vorhergehenden Ansprüche, wenn der Betriebs der lichtemittierenden Vorrichtung (102) gesteuert wird, das Rechnersystem (106) dazu eingerichtet ist,
den Betrieb der lichtemittierenden Vorrichtung (102) derart zu steuern, dass die lichtemittierende Vorrichtung (102) ein erstes Licht mit einer ersten Farbe emittiert, wenn das Reihenführungssystem eingeschaltet, aber nicht aktiviert ist; und den Betrieb der lichtemittierenden Vorrichtung (102) derart zu steuern, dass die lichtemittierende Vorrichtung (102) ein zweites Licht mit einer zweiten Farbe emittiert, wenn das Reihenführungssystem aktiviert ist, wobei die zweite Farbe sich von der ersten Farbe unterscheidet.

4. System (100) nach Anspruch 1, das des Weiteren aufweist:
einen Sensor (104), der dazu eingerichtet ist, Daten zu erzeugen, die den Betriebsparameter der landwirtschaftlichen Erntemaschine (10) angeben, wobei der Sensor (104) mit dem Rechnersystem (106) kommunikationsmäßig gekoppelt ist,
wobei:
wenn der Eingang empfangen wird, das Rechnersystem (106) dazu eingerichtet ist, die vom Sensor (104) erzeugten Daten zu empfangen; und
das Rechnersystem (106) des Weiteren dazu eingerichtet ist, den Betriebsparameter basierend auf den empfangenen Daten zu bestimmen.

5. System (100) nach einem der Ansprüche 1 oder 4, wobei das Rechnersystem (106) beim Steuern des Betriebs der lichtemittierenden Vorrichtung (102) dazu eingerichtet ist:
den bestimmten Betriebsparameter mit einem vorgegebenen Bereich zu vergleichen; und
wenn der bestimmte Betriebsparameter außerhalb des vorgegebenen Bereichs liegt, den Betrieb der lichtemittierenden Vorrichtung (102) derart zu steuern, dass die lichtemittierende Vorrichtung (102) ein blinkendes Licht emittiert.

6. System (100) nach einem der vorhergehenden Ansprüche, wobei das Rechnersystem (106) beim Steuern des Betriebs der lichtemittierenden Vorrichtung (102) dazu eingerichtet ist, den Betrieb der lichtemittierenden Vorrichtung (102) derart zu steuern, dass die lichtemittierende Vorrichtung (102) Licht emittiert, wenn die Erntevorrichtung (36) mechanisch eingekuppelt ist.

7. System (100) nach einem der vorhergehenden Ansprüche, wobei die lichtemittierende Vorrichtung (102) einen Licht emittierenden Diodenstreifen (LED-Streifen) (102) aufweist, der sich entlang mindestens eines Abschnitts einer Außenfläche (90) des jeweiligen Reihenteilers (86, 86A, 86B) erstreckt.

8. System (100) nach einem der vorhergehenden Ansprüche, wobei der jeweilige Reihenteiler (86, 86A, 86B) ein mittlerer Reihenteiler (86A, 86B) der Mehrzahl von Reihenteilern (86, 86A, 86B) ist.

9. System nach einem der vorhergehenden Ansprüche, wobei die Erntevorrichtung (36) ein Maisvorsatz (36) ist.

10. Verfahren (300) zum Bereitstellen von Benachrichtigungen bezüglich eines Betriebsparameters während des Betriebs einer landwirtschaftlichen Erntemaschine (10), wobei die landwirtschaftliche Erntemaschine (10) eine Erntevorrichtung (36) mit einem Rahmen (72) und einer Mehrzahl von Reihenteilern (86, 86A, 86B), die an dem Rahmen (72) gehalten sind, aufweist, wobei das Verfahren (300) durch folgende Schritte gekennzeichnet ist:
Steuern, mittels eines Rechnersystems (106), eines Betriebs der landwirtschaftlichen Erntemaschine (10), so dass ein Erntevorgang durchgeführt wird;
Empfangen, mittels des Rechnersystems (106), eines Eingangs, der einen Betriebsparameter der landwirtschaftlichen Erntemaschine (10) angibt; und
Steuern, mittels des Rechnersystems (106), eines Betriebs einer lichtemittierenden Vorrichtung (102), die an einem jeweiligen Reihenteiler (86, 86A, 86B) der Mehrzahl von Reihenteilern (86, 86A, 86B) angeordnet ist, basierend auf dem Betriebsparameter.

11. Verfahren (300) nach Anspruch 10, wobei der Betriebsparameter mindestens einen Parameter aufweist, nämlich dass ein Reihenführungssystem der landwirtschaftlichen Erntemaschine (10) aktiviert ist oder dass das Reihenführungssystem eingeschaltet ist.

12. Verfahren (300) nach einem der Ansprüche 10 oder 11, wobei das Steuern des Betriebs der lichtemittierenden Vorrichtung (102) Folgendes umfasst:
Steuern, mittels des Rechnersystems (106), des Betriebs der lichtemittierenden Vorrichtung (102) derart, dass die lichtemittierende Vorrichtung (102) ein erstes Licht mit einer ersten Farbe emittiert, wenn das Reihenführungssystem eingeschaltet, aber nicht aktiviert ist; und
Steuern, mittels des Rechnersystems (106), des Betriebs der lichtemittierenden Vorrichtung (102) derart, dass die lichtemittierende Vorrichtung (102) ein zweites Licht mit einer zweiten Farbe emittiert, wenn das Reihenführungssystem aktiviert ist, wobei die zweite Farbe sich von der ersten Farbe unterscheidet.

13. Verfahren (300) nach Anspruch 10, wobei das Empfangen des Eingangs das Empfangen, mittels des Rechnersystems (106), von Sensordaten aufweist, die den Betriebsparameter der landwirtschaftlichen Erntemaschine (10) angeben, wobei das Verfahren (300) des Weiteren das Bestimmen, mittels des Rechnersystems (106), des Betriebsparameters basierend auf den empfangenen Sensordaten aufweist.

14. Verfahren (300) nach einem der Ansprüche 10 oder 13, wobei das Steuern des Betriebs der lichtemittierenden Vorrichtung (102) Folgendes umfasst:
Vergleichen, mittels des Rechnersystems (106), des bestimmten Betriebsparameters mit einem vorgegebenen Bereich; und
wenn der bestimmte Betriebsparameter außerhalb des vorgegebenen Bereichs liegt, Steuern, mittels des Rechnersystems (106), des Betriebs der lichtemittierenden Vorrichtung (102) derart, dass die lichtemittierende Vorrichtung (102) ein blinkendes Licht emittiert.

## Revendications

1. Un système (100) pour la fourniture de notifications de paramètres de fonctionnement pendant le fonctionnement d'une moissonneuse agricole (10), le système (100) comprenant un outil de récolte (36) incluant un châssis (72) et une pluralité de séparateurs de rang (86, 86A, 86B) soutenus par le châssis (72), le système (100) étant **caractérisé par** :
un dispositif luminescent (102) positionné au niveau d'un séparateur de rang respectif (86, 86A, 86B) parmi la pluralité de séparateurs de rang (86, 86A, 86B) ; et
un système informatique (106) configuré pour :
recevoir une entrée indicative d'un paramètre de fonctionnement de la moissonneuse agricole (10) ; et
contrôler un fonctionnement du dispositif luminescent (102) en fonction du paramètre de fonctionnement.

2. Le système (100) selon la revendication 1, dans lequel le paramètre de fonctionnement comprend au moins l'un parmi un système de guidage sur le rang de la moissonneuse agricole (10) ayant été autorisé et le système de guidage sur le rang ayant été activé.

3. Le système (100) selon l'une quelconque des revendications précédentes, dans lequel, lors du contrôle du fonctionnement du dispositif luminescent (102), le système informatique (106) est configuré pour :
contrôler le fonctionnement du dispositif luminescent (102) de sorte que le dispositif luminescent (102) émet une première couleur de lumière lorsque le système de guidage sur le rang est autorisé, mais non activé ; et
contrôler le fonctionnement du dispositif luminescent (102) de sorte que le dispositif luminescent (102) émet une seconde couleur de lumière lorsque le système de guidage sur le rang est activé, la seconde couleur de lumière étant différente de la première couleur de lumière.

4. Le système (100) selon la revendication 1, comprenant en outre :
un capteur (104) configuré pour générer des données indicatives du paramètre de fonctionnement de la moissonneuse agricole (10), le capteur (104) étant couplé de manière communicative au système informatique (106),
dans lequel :
lors de la réception de l'entrée, le système informatique (106) est configuré pour recevoir les données générées par le capteur (104) ; et
le système informatique (106) est en outre configuré pour déterminer le paramètre de fonctionnement en fonction des données reçues.

5. Le système (100) selon l'une quelconque des revendications 1 ou 4, dans lequel, lors du contrôle du fonctionnement du dispositif luminescent (102), le système informatique (106) est configuré pour :
comparer le paramètre de fonctionnement déterminé avec une plage prédéterminée ; et
lorsque le paramètre de fonctionnement déterminé sort de la plage prédéterminée, contrôler le fonctionnement du dispositif luminescent (102) de sorte que le dispositif luminescent (102) émet une lumière clignotante.

6. Le système (100) selon l'une quelconque des revendications précédentes, dans lequel, lors du contrôle du fonctionnement du dispositif luminescent (102), le système informatique (106) est configuré pour contrôler le fonctionnement du dispositif luminescent (102) de sorte que le dispositif luminescent (102) émet de la lumière lorsque l'outil de récolte (36) est mis en prise mécaniquement.

7. Le système (100) selon l'une quelconque des revendications précédentes, dans lequel le dispositif luminescent (102) comprend une bande de diodes électroluminescentes (DEL) (102) s'étendant le long d'au moins une partie d'une surface extérieure (90) du séparateur de rang respectif (86, 86A, 86B).

8. Le système (100) selon l'une quelconque des revendications précédentes, dans lequel le séparateur de rang respectif (86, 86A, 86B) est un séparateur de rang central (86A, 86B) parmi la pluralité de séparateurs de rang (86, 86A, 86B).

9. Le système selon l'une quelconque des revendications précédentes, dans lequel l'outil de récolte (36) est un bec cueilleur à maïs (36).

10. Un procédé (300) pour la fourniture de notifications de paramètres de fonctionnement pendant le fonctionnement d'une moissonneuse agricole (10), la moissonneuse agricole (10) incluant un outil de récolte (36) comportant un châssis (72) et une pluralité de séparateurs de rang (86, 86A, 86B) soutenus par le châssis (72), le procédé (300) étant **caractérisé par** :
le contrôle, à l'aide d'un système informatique (106), d'un fonctionnement de la moissonneuse agricole (10) de sorte qu'une opération de récolte est effectuée ;
la réception, à l'aide du système informatique (106), d'une entrée indicative d'un paramètre de fonctionnement de la moissonneuse agricole (10) ; et
le contrôle, à l'aide du système informatique (106), d'un fonctionnement d'un dispositif luminescent (102) positionné sur un séparateur de rang respectif (86, 86A, 86B) parmi la pluralité de séparateur de rang (86, 86A, 86B) en fonction du paramètre de fonctionnement.

11. Le procédé (300) selon la revendication 10, dans lequel le paramètre de fonctionnement comprend au moins l'un parmi un système de guidage sur le rang de la moissonneuse agricole (10) ayant été autorisé et le système de guidage sur le rang ayant été activé.

12. Le procédé (300) selon l'une quelconque des revendications 10 ou 11, dans lequel le contrôle du fonctionnement du dispositif luminescent (102) comprend :
le contrôle, à l'aide du système informatique (106), du fonctionnement du dispositif luminescent (102) de sorte que le dispositif luminescent (102) émet une première couleur de lumière lorsque le système de guidage sur le rang est autorisé, mais qu'il n'est pas activé ; et
le contrôle, à l'aide du système informatique (106), du fonctionnement du dispositif luminescent (102) de sorte que le dispositif luminescent (102) émet une seconde couleur de lumière lorsque le système de guidage sur le rang est activé, la seconde couleur de lumière étant différente de la première couleur de lumière.

13. Le procédé (300) selon la revendication 10, dans lequel la réception de l'entrée comprend la réception, à l'aide du système informatique (106), de données de capteur indicatives du paramètre de fonctionnement de la moissonneuse agricole (10), le procédé (300) comprenant en outre la détermination, à l'aide du système informatique (106), du paramètre de fonctionnement en fonction des données de capteur reçues.

14. Le procédé (300) selon l'une quelconque des revendications 10 ou 13, dans lequel le contrôle du fonctionnement du dispositif luminescent (102) comprend :
la comparaison, à l'aide du système informatique (I06), du paramètre de fonctionnement déterminé avec une plage prédéterminée ; et
lorsque le paramètre de fonctionnement déterminé sort de la plage prédéterminée, le contrôle, à l'aide du système informatique (106), du fonctionnement du dispositif luminescent (102) de sorte que le dispositif luminescent (102) émet une lumière clignotante.
